# FASCICULE DE BREVET EUROPEEN

(11) **EP 1 598 642 B1**
(45) Date de publication et mention de la délivrance du brevet: **13.08.2014**
(21) Numéro de dépôt: 05290752.4
(22) Date de dépôt: 06.04.2005
(51) Int. Cl.: G01C 23/00, B64D 43/00, G06F 3/14

(54) **Indicateur de pilotage pour un aéronef.**
Anzeigesystem für Flugzeuge
Aircraft cockpit indicator

(30) Priorité: 18.05.2004 FR 0405382
(43) Date de publication de la demande: 23.11.2005
(73) Titulaire: AIRBUS OPERATIONS (SAS), 31060 Toulouse (FR)
(72) Inventeur: Artini, Franck, 31000 Toulouse (FR); Demortier, Jean-Pierre, 32200 Maurens (FR); Bouchet, Christophe, 31000 Toulouse (FR); Barre, Francois, 31830 Plaisance du Touch (FR)
(74) Mandataire: Hauer, Bernard

(56) Documents cités:
- FR-A1- 2 741 320
- US-A- 6 112 141
- US-A1- 2003 132 860
- US-A1- 2003 222 887
- US-B1- 6 690 299

## Description

La présente invention concerne un indicateur de pilotage pour un aéronef qui est guidé le long d'une trajectoire de vol.

Dans le cadre de la présente invention, une trajectoire de vol comporte :
- une trajectoire latérale, comprenant une pluralité de branches latérales successives, qui sont rectilignes et présentent chacune une route particulière ; et
- une trajectoire verticale, comprenant une pluralité de segments verticaux successifs, qui sont rectilignes et présentent chacun une pente particulière.

Lorsque l'aéronef, par exemple un avion de transport militaire, est guidé le long d'une telle trajectoire de vol, le pilote n'est pas prévenu d'un changement de trajectoire, à savoir soit un changement latéral (correspondant à un changement de branche latérale), soit un changement vertical (correspondant à un changement de segment vertical). Aussi, en particulier lorsque le pilote pilote l'aéronef à partir d'ordres fournis par un directeur de vol, il n'est pas en mesure d'anticiper un tel changement de trajectoire et doit de suite suivre les nouveaux ordres fournis par le directeur de vol lors de chaque changement de trajectoire. Un tel pilotage est donc très exigeant pour le pilote, particulièrement à basse altitude où la distribution branche/segment est aléatoire et très fréquente.

Le document US 2003/0222887 A1 prévoit une indication de pilotage pour un aéronef qui est guidé le long d'une trajectoire en forme d'une représentation d'un tunnel en perspective.

La présente invention concerne un indicateur de pilotage pour aéronef, permettant de remédier à ces inconvénients.

Selon l'invention, ledit indicateur de pilotage est remarquable en ce qu'il comporte :
- une unité centrale susceptible de déterminer tout changement de trajectoire correspondant à un changement vertical qui représente un changement de segment vertical ou un changement latéral qui représente un changement de branche latérale ; et
- des moyens d'affichage :
   - qui sont susceptibles de présenter, sur au moins un écran de visualisation :
      * au moins un premier moyen d'indication indiquant au moins un prochain changement vertical ; et
      * au moins un second moyen d'indication indiquant au moins un prochain changement latéral ; et
   - qui sont formés de manière à présenter au moins l'un desdits premier et second moyens d'indication, à savoir celui indiquant le changement de trajectoire le plus rapproché, à partir de la position actuelle de l'aéronef (avec une figuration simple et intuitive).

Ainsi, grâce audit indicateur de pilotage, le pilote de l'aéronef est informé au moins du prochain changement de trajectoire, ce qui lui permet d'anticiper ce changement de trajectoire. La présente invention permet donc de réduire le stress et la charge de travail du pilote de l'aéronef, dans une telle phase de vol présentant un changement de trajectoire, qui est très exigeante.

Un indicateur de pilotage conforme à l'invention peut être appliqué à tout type de trajectoire comprenant des branches latérales et des segments verticaux tels que précités.

De façon avantageuse, lesdits moyens d'affichage présentent simultanément lesdits premier et second moyens d'indication.

Dans le cadre de la présente invention, ledit écran de visualisation peut être un écran tête haute ou un écran tête basse.

On utilise de préférence des écrans de visualisation existant déjà sur l'aéronef, ce qui a pour effet de réduire le coût et l'encombrement de l'indicateur de pilotage conforme à l'invention, et permet une utilisation variée.

Dans un premier mode de réalisation principal, lesdits premier et second moyens d'indication sont autonomes sur l'écran de visualisation, par rapport à d'autres affichages dudit écran de visualisation.

De préférence, chacun desdits premier et second moyens d'indication comporte une flèche.

Premièrement, de façon avantageuse, ledit premier moyen d'indication comporte une flèche qui est dirigée :
- vers le haut, si le prochain segment vertical présente une pente positive ; et
- vers le bas, si le prochain segment vertical présente une pente négative.

Deuxièmement, de façon avantageuse, ledit second moyen d'indication comporte une flèche qui est dirigée :
- vers la droite, si la prochaine branche latérale est atteinte par une rotation vers la droite ; et
- vers la gauche, si la prochaine branche latérale est atteinte par une rotation vers la gauche.

Ceci permet au pilote non seulement d'anticiper un prochain changement de trajectoire, mais permet de plus de l'informer du type de changement de trajectoire prévu (avec un nouveau segment vertical à pente positive ou négative, ou bien une nouvelle branche latérale nécessitant une rotation vers la droite ou vers la gauche).

Dans un mode de réalisation particulier, la longueur de ladite flèche est fonction d'une intensité particulière (pente, rayon de virage) concernant le prochain changement de trajectoire et chacun desdits premier et second moyens d'indication comporte, de plus, au moins une barrette qui est associée à ladite flèche et qui permet de présenter une intensité limite pour le prochain changement indiqué.

Dans ce cas, avantageusement :
- ledit premier moyen d'indication comporte une seule barrette qui indique la pente maximale que l'aéronef peut voler ; et
- ledit second moyen d'indication comporte deux barrettes qui indiquent, respectivement, les rayons de virage maximal et minimal que l'aéronef peut voler.

Ce mode de réalisation particulier permet donc de présenter de plus une information relative à la difficulté du prochain changement de trajectoire et la marge de manoeuvre restante, par rapport aux capacités maximales de l'aéronef.

Dans un autre mode de réalisation particulier, chacun desdits moyens d'indication comporte, de plus, une horloge qui indique le temps restant jusqu'au prochain changement de trajectoire, latéral ou vertical.

De façon avantageuse, ladite horloge est présentée sous forme d'un cercle, dont la représentation diminue progressivement de sorte que la partie restante est proportionnelle audit temps restant. Dans ce cas :
- dans une première variante, le temps restant, indiqué par un cercle complet, correspond à une durée prédéterminée ; et
- dans une seconde variante, le temps restant, indiqué par un cercle complet, correspond à une durée de vol prédite de l'aéronef, entre le dernier changement de trajectoire et le prochain changement de trajectoire.

Par ailleurs, dans une première variante, lesdits premier et second moyens d'indication sont autonomes sur l'écran de visualisation, l'un par rapport à l'autre, alors que dans une deuxième variante, lesdits moyens d'affichage présentent un indicateur global comprenant au moins deux moyens d'indication et une seule horloge.

Dans cette seconde variante, de façon avantageuse, lesdits moyens d'affichage présentent de manière différenciée lesdits deux moyens d'indication dudit indicateur global.

De plus, dans cette seconde variante, de façon avantageuse :
- lesdits moyens d'affichage remettent à jour ledit indicateur global, à chaque changement de trajectoire ; et/ou
- lesdits moyens d'affichage mettent en évidence, sur un moyen d'indication dudit indicateur global, le cas échéant, le nombre de changements prochains et consécutifs concernant le type de changement de trajectoire indiqué par ce moyen d'indication.

En outre, avantageusement :
- dans une première variante, lesdits moyens d'affichage présentent de manière identique deux moyens d'indication qui indiquent deux changements de trajectoire qui sont réalisés simultanément (vertical et latéral) ; et
- dans une seconde variante, lesdits moyens d'affichage présentent une flèche globale correspondant à la somme vectorielle de deux flèches relatives à deux moyens d'indication qui indiquent deux changements de trajectoire qui sont réalisés simultanément (vertical et latéral).

Par ailleurs, avantageusement, lesdits moyens d'affichage présentent (notamment verticalement ou horizontalement) une pluralité de moyens d'indication, selon un ordre correspondant à l'ordre d'apparition des changements de trajectoire indiqués correspondants.

Dans un second mode de réalisation principal, au moins l'un desdits premier et second moyens d'indication est associé à une mire de guidage qui est également présentée sur ledit écran de visualisation. De préférence, lesdits moyens d'indication comportent chacun une barrette.

Dans ce cas, avantageusement, ledit premier moyen d'indication comporte une barrette qui est présentée :
- en haut de la mire de guidage, si le prochain segment vertical présente une pente positive ; et
- en bas de la mire de guidage, si le prochain segment vertical présente une pente négative.

En outre, de façon avantageuse, ledit second moyen d'indication comporte une barrette qui est présentée :
- à droite de la mire de guidage, si la prochaine branche latérale est atteinte par une rotation vers la droite ; et
- à gauche de la mire de guidage, si la prochaine branche latérale est atteinte par une rotation vers la gauche.

Dans un mode de réalisation particulier, lesdits moyens d'affichage présentent de manière différenciée, le cas échéant, une pluralité de telles barrettes.
Les figures du dessin annexé feront bien comprendre comment l'invention peut être réalisée. Sur ces figures, des références identiques désignent des éléments semblables.
La figure 1 est le schéma synoptique d'un dispositif conforme à l'invention.
Les figures 2 à 15 montrent schématiquement des moyens d'indication conformes à un premier mode de réalisation principal de l'invention.
Les figures 16 à 18 montrent schématiquement des moyens d'indication conformes à un second mode de réalisation principal de l'invention.

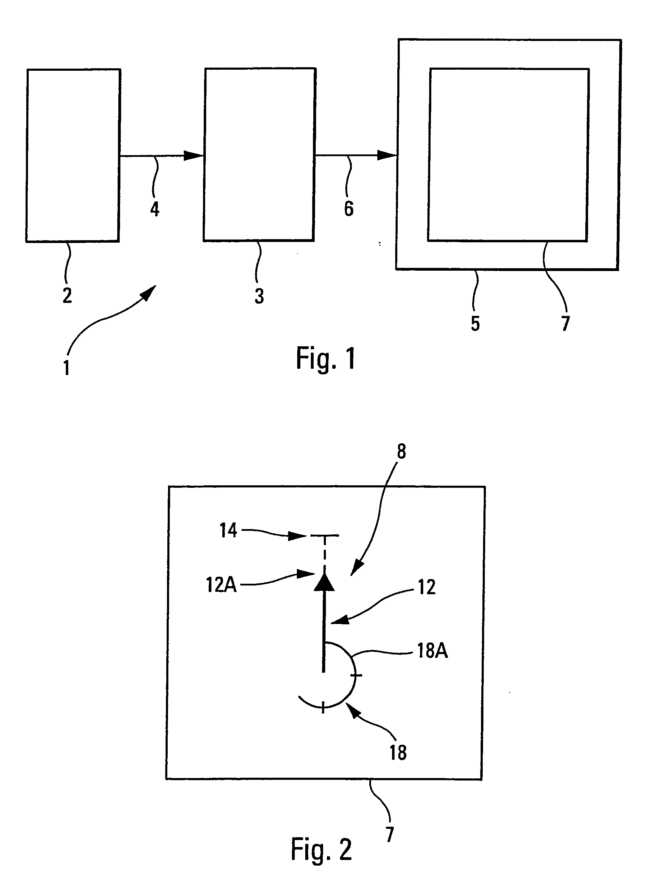

L'indicateur de pilotage 1 conforme à l'invention et représenté schématiquement sur la figure 1 est destiné à aider le pilote d'un aéronef, en particulier d'un avion de transport militaire, lors du pilotage de cet aéronef.

Selon l'invention, ledit indicateur de pilotage 1 comporte :
- un ensemble 2 de sources d'informations qui connaissent notamment la position courante de l'aéronef, la vitesse courante de l'aéronef et la trajectoire de vol le long de laquelle ledit aéronef est guidé. Dans le cadre de la présente invention, cette trajectoire de vol qui est déterminée, par exemple, par un moyen approprié intégré dans ledit ensemble 2 de sources d'informations, comporte :
   ■ une trajectoire verticale comportant une pluralité de segments verticaux successifs, qui sont rectilignes et présentent chacun une pente particulière ; et
   ■ une trajectoire latérale comprenant une pluralité de branches latérales successives, qui sont rectilignes et présentent chacune une route particulière ;
- une unité centrale 3 qui est reliée par une liaison 4 audit ensemble 2 de sources d'informations et qui est susceptible de déterminer tout changement de trajectoire correspondant :
   ■ soit à un changement vertical, qui représente un changement de segment vertical, c'est-à-dire lorsque l'aéronef passe d'un premier segment vertical (présentant une première pente) à un second segment vertical (présentant une seconde pente) de ladite trajectoire verticale ;
   ■ soit à un changement latéral, qui représente un changement de branche latérale, c'est-à-dire lorsque l'aéronef passe d'une première branche latérale (présentant une première route) à une seconde branche latérale (présentant une seconde route) de ladite trajectoire latérale ; et
- des moyens d'affichage 5 :
   ■ qui sont reliés par une liaison 6 à ladite unité centrale 3 ;
   ■ qui sont susceptibles de présenter sur un écran de visualisation 7 :
      * au moins un premier moyen d'indication 8, 9 indiquant au moins le prochain changement vertical ; et
      * au moins un second moyen d'indication 10, 11 indiquant au moins le prochain changement latéral ; et
   ■ qui sont formés de manière présentée au moins l'un desdits premier et seconds moyens d'indication 8, 9, 10, 11, à savoir au moins celui indiquant le changement de trajectoire le plus rapproché (aussi bien en temps qu'en distance), à partir de la position actuelle de l'aéronef, lors du vol de l'aéronef le long de ladite trajectoire de vol.

Bien entendu, la présente invention s'applique à tout type de trajectoire de vol, dont la trajectoire latérale comporte des branches latérales et la trajectoire verticale des segments verticaux.

Toutefois, dans un mode de réalisation préféré, ladite trajectoire de vol qui est déterminée par ledit ensemble 2 de sources d'informations, est une trajectoire dite "à la ficelle", dont les transitions latérale et verticale respectivement entre des branches latérales et des segments verticaux, sont des arcs de cercle à rayons constants, qui sont issus de considérations de vitesse de consigne et de facteurs de charge maximaux admissibles. Cette trajectoire de vol est une trajectoire anticipée prédite, déterminée à l'aide de performances de montée et de descente prédites.

Dans le cadre de la présente invention, ledit écran de visualisation 7 peut notamment être un écran usuel tête haute, du type HUD ("Head Up Display" en anglais), ou un écran de pilotage usuel tête basse.

L'indicateur de pilotage 1 conforme à l'invention est donc un dispositif d'aide au pilotage, qui permet de réduire la charge de travail du pilote (qui existe pour le pilote dans la situation usuelle, notamment pour surveiller et attendre les prochains changements de trajectoire). Grâce à l'invention, le pilote peut ainsi se concentrer plutôt sur le pilotage du changement de trajectoire prévu. On notera qu'un écran de visualisation tête haute présente de plus l'avantage, par rapport à un écran de visualisation tête basse, d'éviter au pilote d'avoir à changer sans cesse de direction de regard, entre la vision à l'avant de l'aéronef pour le pilotage et la vision vers le bas pour regarder l'écran de visualisation.

Dans le cadre de la présente invention, les affichages réalisés par lesdits moyens d'affichage 5, notamment lorsqu'ils sont appliqués à un écran de visualisation 7 tête haute, présentent une symbologie simplifiée avec en particulier des formes élémentaires telles que par exemple des arcs de cercle, des segments rectilignes et des caractères alphanumériques (et/ou éventuellement des couleurs facilement distinguables).

Dans un premier mode de réalisation principal préféré, représenté sur les figures 2 à 15, et adapté plus spécifiquement à un écran de visualisation 7 tête haute, lesdits premier et second moyens d'indication 8 et 10 sont autonomes sur l'écran de visualisation 7 par rapport à d'autres affichages (non représentés) dudit écran de visualisation 7. De plus, chacun desdits premier et second moyens d'indication 8 et 10 comporte une flèche 12, 13, comme représenté sur la figure 2 pour ledit premier moyen d'indication 8.

Ce premier moyen d'indication 8 qui indique donc le prochain changement vertical, comporte une flèche 12 qui est dirigée :
- vers le haut, si le prochain segment vertical présente une pente positive ; et
- vers le bas, si le prochain segment vertical présente une pente négative.

La longueur de la flèche 12, 13 de chacun desdits moyens d'indication 8 et 10 est fonction d'une intensité précisée ci-dessous, concernant le prochain changement indiqué. En outre, chacun desdits moyens d'indication 8 et 10 comporte, de plus, au moins une barrette 14, 15 et 16 qui est associée à ladite flèche 12, 13 et qui permet de présenter une intensité limite pour le prochain changement indiqué (pente maximale en montée ou descente pour le plan vertical ; rayon de virage maximal pour le plan latéral).

Plus précisément, la longueur de la flèche 12 (moyen d'indication 8) est fonction de la pente que l'aéronef doit voler pour suivre le prochain segment vertical, et la barrette 14 indique la pente maximale que l'aéronef est en mesure de voler.

Ceci permet au pilote d'anticiper la difficulté (l'intensité) pour voler suivant le prochain segment vertical, et la marge de pente restante (écart entre l'extrémité 12A de la flèche 12 et la barrette 14) par rapport à la pente maximale.

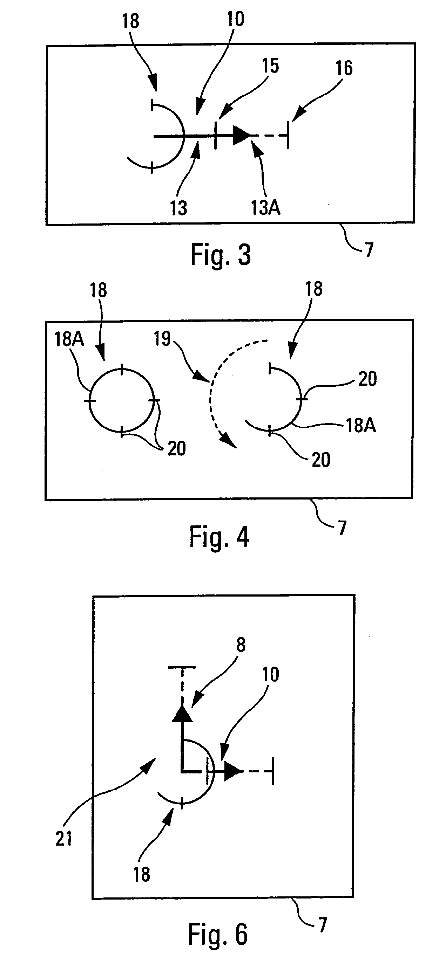

En outre, ledit moyen d'indication 10 qui permet d'indiquer un prochain changement latéral et qui est représenté sur la figure 3, comporte la flèche 13 qui est dirigée :
- vers la droite, si la prochaine branche latérale est atteinte par une rotation vers la droite ; et
- vers la gauche, si la prochaine branche latérale est atteinte par une rotation vers la gauche.

En outre, la longueur de ladite flèche 13 dépend du rayon de l'arc de cercle que l'aéronef doit voler (en rotation) pour rejoindre la prochaine branche latérale, et lesdites barrettes 15 et 16 indiquent respectivement les rayons minimal et maximal d'un arc de cercle que l'aéronef est en mesure de voler pour rejoindre une prochaine branche latérale. Les différentes marges sont illustrées par les écarts entre respectivement l'extrémité 13A de la flèche 13 et lesdites barrettes 15 et 16.

Chacun desdits moyens d'indication 8 et 10 comporte, de plus, une horloge 18 qui est présentée sous forme d'un cercle (ou arc de cercle) 18A et qui indique le temps restant jusqu'au prochain changement de trajectoire, comme illustré par exemple sur la figure 4. Cette horloge 18 représente donc un compte à rebours qui commence à un temps restant donné, avant le prochain changement de trajectoire. Ce temps restant peut être une constante de temps définie pendant la préparation de la mission, par exemple conformément à la longueur minimale d'un segment vertical et à la consigne de vitesse associée le cas échéant. Lorsque le cercle 18A est plein, comme représenté sur la partie gauche de la figure 4, le temps restant avant le prochain changement de trajectoire est plus grand que ladite constante de temps prédéfinie. En revanche, dès que le temps restant jusqu'au prochain changement de trajectoire devient plus petit que cette constante de temps, l'arc de cercle 18A diminue, comme illustré par une flèche 19 sur la partie droite de la figure 4, et ceci jusqu'à disparaître lorsque le changement de trajectoire a lieu. Ensuite, un nouveau cercle complet (c'est-à-dire de 360°) réapparaît dès que ledit changement de trajectoire a eu lieu.

A titre d'exemple, un cercle complet de cette horloge 18 peut représenter 60 secondes de vol. Aussi, l'arc de cercle 18A commence à diminuer dès que l'aéronef est à 60 secondes de vol du prochain changement de trajectoire. Des traits 20 sur le cercle (ou l'arc de cercle) 18A indiquent des intervalles de temps (par exemple toutes les 15 secondes dans l'exemple précédent) et permettent donc d'aider le pilote à mieux estimer le temps restant.

Une autre solution consiste à considérer que le compte à rebours est initialisé, au moment d'un changement de trajectoire, avec le temps restant avant le prochain changement (et donc variable d'un changement à l'autre). L'arc de cercle 18A diminue alors durant un temps qui correspond au temps de vol prédit entre deux changements de trajectoires successifs. La vitesse de diminution de l'arc de cercle 18A est donc, dans ce cas, une caractéristique de la distance entre deux changements de trajectoire successifs.

L'horloge 18 est associée à un moyen d'indication 8, 10 comme représenté sur les figures 2 et 3.

Ainsi, grâce à l'invention, l'indication du temps restant prend un minimum de place sur l'écran de visualisation 7 et permet d'éviter la présentation d'une valeur numérique additionnelle sur ce dernier.

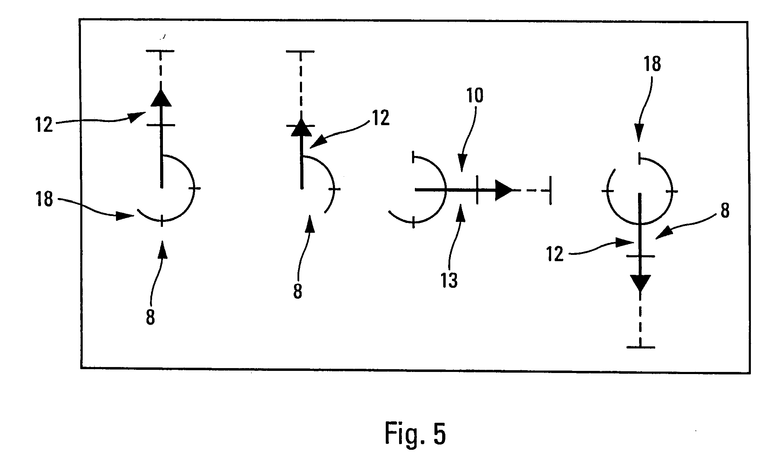

Dans un mode de réalisation particulier, les différents moyens d'indication 8 et 10 qui sont présentés sur l'écran de visualisation 7, sont autonomes les uns par rapport aux autres. Dans ce cas, dans une variante préférée, ledit moyen d'affichage 5 présente une pluralité de moyens d'indication 8, 10 qui sont présentés selon un ordre particulier (défini par exemple horizontalement de la gauche vers la droite, comme représenté sur la figure 5, ou verticalement de haut en bas) qui correspond à l'ordre d'apparition des changements de trajectoire indiqués par ces différents moyens d'indication 8, 10 ainsi présentés.

Dans l'exemple de la figure 5, l'aéronef va rencontrer des changements de trajectoire aboutissant successivement à :
- un segment vertical (de montée) présentant une première pente positive ;
- un segment vertical (de montée) présentant une seconde pente positive plus faible que ladite première pente positive ;
- une branche latérale, à atteindre par une rotation vers la droite ; et
- un segment vertical de descente présentant donc une pente négative.

On notera que dans ce cas, une seule horloge 18 est de préférence prévue, qui est, après chaque changement de trajectoire, associée au moyen d'indication indiquant le changement de trajectoire suivant.

Dans un mode de réalisation préféré, les moyens d'affichage 5 présentent, sur l'écran de visualisation 7, un indicateur global 21 comprenant au moins deux moyens d'indication 8, 10 et une seule horloge 18, comme représenté sur la figure 6. Dans ce cas, l'horloge 18 concerne uniquement le prochain changement (vertical ou latéral) prévu.

De plus, pour savoir quel moyen d'indication 8, 10 indique le prochain changement de trajectoire, lesdits moyens d'affichage 5 présentent de manière différenciée lesdits deux moyens d'indication 8, 10 dudit indicateur global 21. Une telle différentiation peut être réalisée par des couleurs différentes ou par des tracés différents, comme cela est le cas sur les figures 6 à 12, sur lesquelles le moyen d'indication correspondant au prochain changement est en trait continu et le moyen d'indication correspondant à un autre changement suivant est en traits interrompus.

Bien entendu, ledit indicateur global 21 est remis à jour à chaque changement de trajectoire : par exemple, le second changement devient le premier ou prochain changement, le troisième changement devient le second changement, et ainsi de suite.

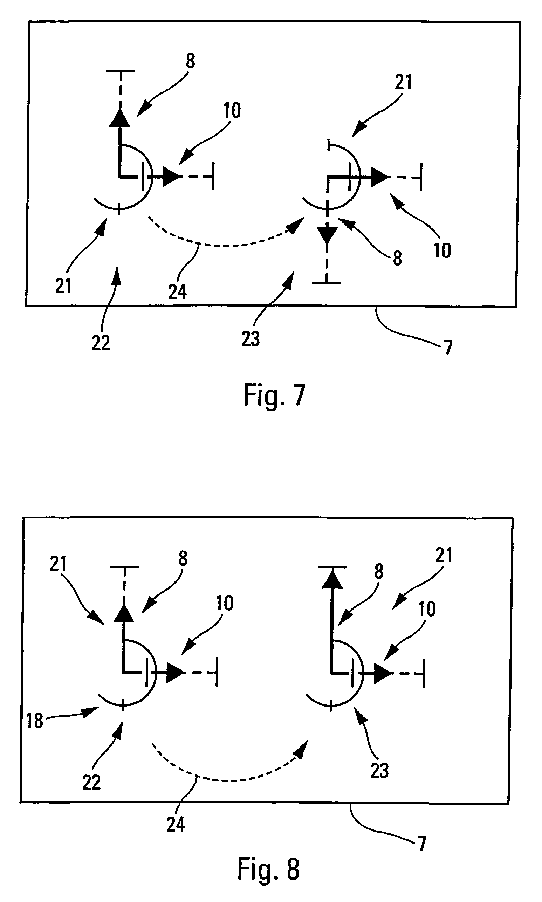

Sur les figures 7 à 11, 13 et 15, l'indicateur global 21 est représenté sur la partie gauche, dans la situation actuelle 22, et sur la partie droite, dans une situation suivante 23, comme illustré par une flèche 24 mettant en évidence le passage d'une situation à une autre.

Dans l'exemple de la figure 7 :
- dans la situation actuelle 22, le prochain changement aboutira à une montée suivie par une rotation vers la droite ;
- lorsque le changement concernant la montée est réalisé, dans la situation suivante 23, le prochain changement concerne donc cette rotation vers la droite, qui sera ensuite suivie par une descente.

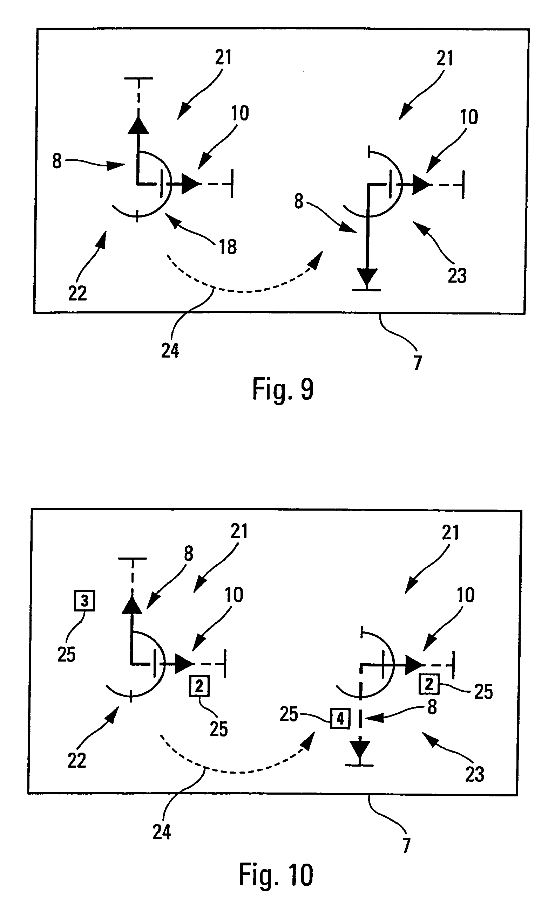

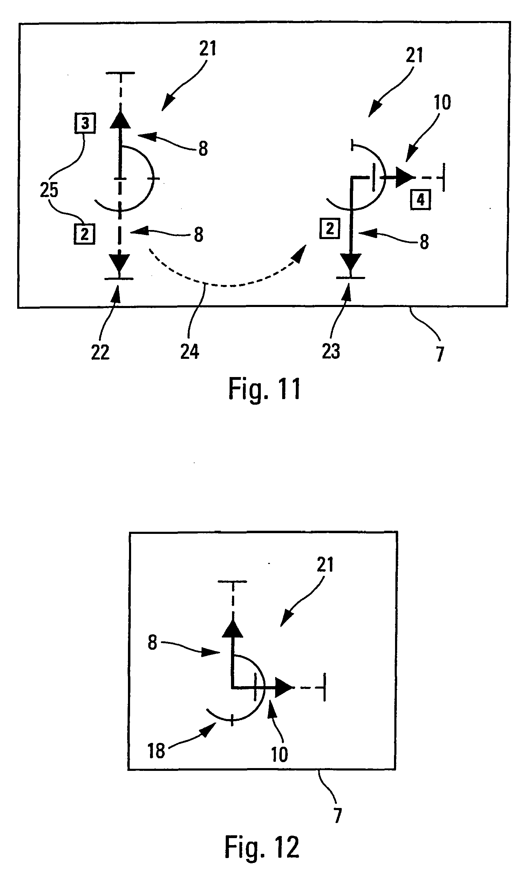

Lorsque les deux prochains changements concernent le même plan géométrique (par exemple deux montées), deux solutions sont possibles. Une première solution est représentée sur les figures 8 et 9, et la seconde solution est représentée sur les figures 10 et 11.

La première solution est illustrée sur la figure 8 à l'aide d'un exemple, selon lequel l'aéronef va rencontrer des changements de trajectoire aboutissant successivement à :
- un segment vertical de montée ;
- un segment vertical de montée avec une pente plus importante ; et
- une branche latérale à atteindre par une rotation vers la droite.

La première solution consiste à présenter sur l'écran de visualisation 7 uniquement le premier changement vertical avec le premier changement latéral, même si ce premier changement vertical et ce premier changement latéral ne sont pas consécutifs. Dans ce cas, lorsque par exemple le premier changement vertical a été réalisé, l'indicateur global 21 montre le second changement vertical (situation 23 avec le moyen d'indication 8 toujours en trait continu), alors que le changement latéral (moyen d'indication 10) reste quant à lui en traits interrompus. Le changement vertical représenté en trait continu correspond bien au changement le plus rapproché. L'horloge est réinitialisée de façon appropriée à chaque changement.

Dans l'exemple de la figure 9, qui concerne également ladite première solution précitée, les trois prochains changements de trajectoire aboutissent à :
- une montée ;
- une descente ; et
- un changement de route vers la droite.

Par conséquent, la descente est affichée en trait continu après la montée dans la situation 23, et le changement de route reste en traits interrompus.

Une seconde solution consiste à définir un moyen d'indication auxiliaire 25, par exemple une flèche ou une valeur numérique, pour indiquer le nombre de changements consécutifs du même type.

Dans l'exemple de la figure 10, on prévoit, de façon consécutive :
- trois montées à pentes différentes ;
- deux changements de route vers la droite ; et
- quatre descentes à pentes différentes.

Quand un premier changement de trajectoire est réalisé, le chiffre du moyen d'indication auxiliaire 25 est baissé d'une unité et passe donc de "trois" à "deux" pour le tout premier changement de trajectoire à partir de la situation 22.

Lorsque tous les changements consécutifs d'un même type sont réalisés, le principe est réinitialisé avec le type des changements suivants, comme illustré par la situation 23. Dans l'exemple représenté, les deux changements de route vers la droite sont donc suivis par quatre descentes consécutives. De plus, le moyen d'indication 10 passe d'un tracé en traits interrompus (situation 22) à un tracé en trait continu (situation 23).

En outre, dans l'exemple de la figure 11, on est en présence, consécutivement de :
- trois montées à pentes différentes ;
- deux descentes à pentes différentes ; et
- quatre changements de route vers la droite.

Par ailleurs, dans le cas où des changements latéral et vertical sont réalisés simultanément, deux solutions sont également proposées.

Dans une première solution, les deux moyens d'indication 8 et 10 sont représentés de façon identique (en trait continu par exemple), comme montré sur la figure 12. La figure 12 indique à titre d'exemple que les deux prochains changements de trajectoire qui seront réalisés simultanément concernent une montée et une rotation vers la droite.

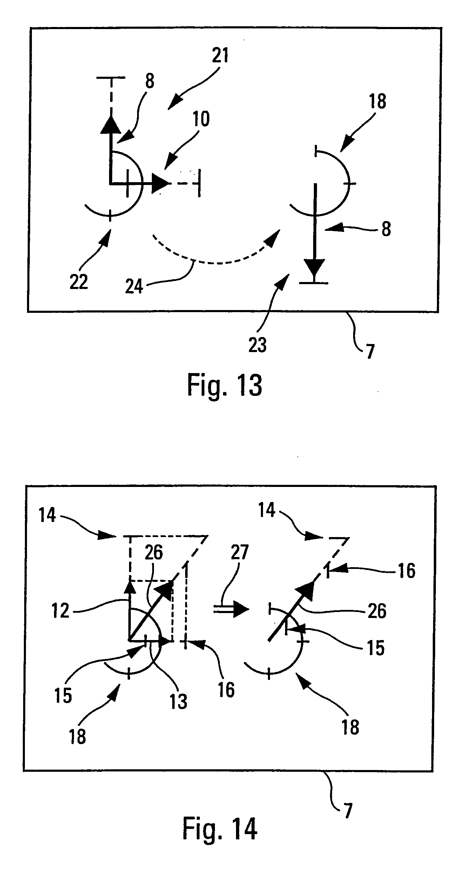

Dans ce cas, lorsque les différents changements de trajectoire sont représentés les uns après les autres, comme illustré sur la figure 5 par exemple, on obtient la situation de la figure 13 lorsque le changement de trajectoire qui suit l'exemple de changement précité (et représenté sur la figure 12) concerne une descente.

Une seconde solution est telle que lesdits moyens d'affichage 7 présentent une flèche globale 26 correspondant à la somme vectorielle des deux flèches 12 et 13 relatives à deux moyens d'indication 8 et 10 qui indiquent deux changements de trajectoire qui sont réalisés simultanément dans deux plans différents, comme représenté sur la figure 14.

La partie gauche de la figure 14 illustre simplement le mode de détermination du moyen d'indication affiché et représenté sur la partie droite, comme montré par une flèche 27. Cette partie gauche permet également d'expliquer la position des barrettes 14, 15 et 16 sur le moyen d'indication de la partie droite.

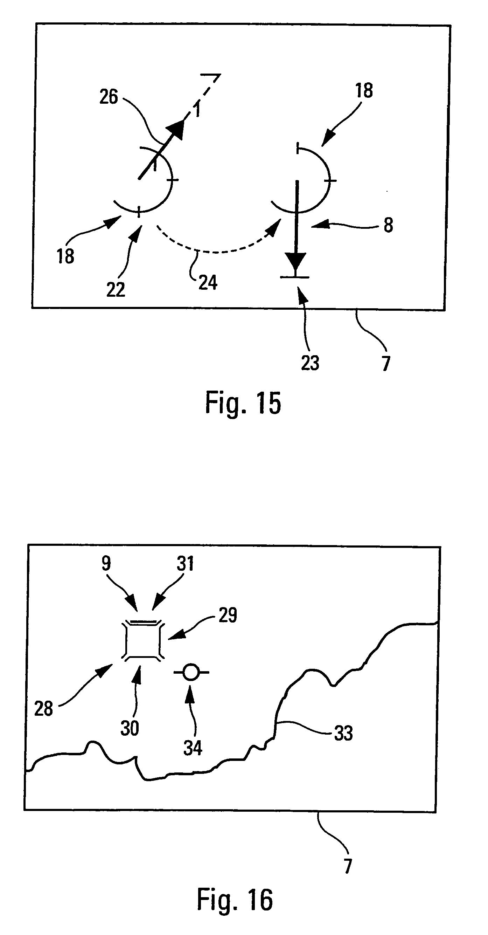

L'exemple particulier illustré sur la figure 13 (relative à la première solution précitée) devient tel qu'illustré sur la figure 15 avec cette seconde solution.

Par ailleurs, dans le second mode de réalisation principal représenté sur les figures 16 à 18, qui est également appliqué à un écran de visualisation 7 tête haute, au moins l'un desdits premier et second moyens d'indication 9 et 11 est associé à une mire de guidage 28 qui est également présenté par ledit écran de visualisation 7, ce qui permet de réduire l'encombrement de l'affichage mis en oeuvre par l'indicateur de pilotage 1 conforme à la présente invention.

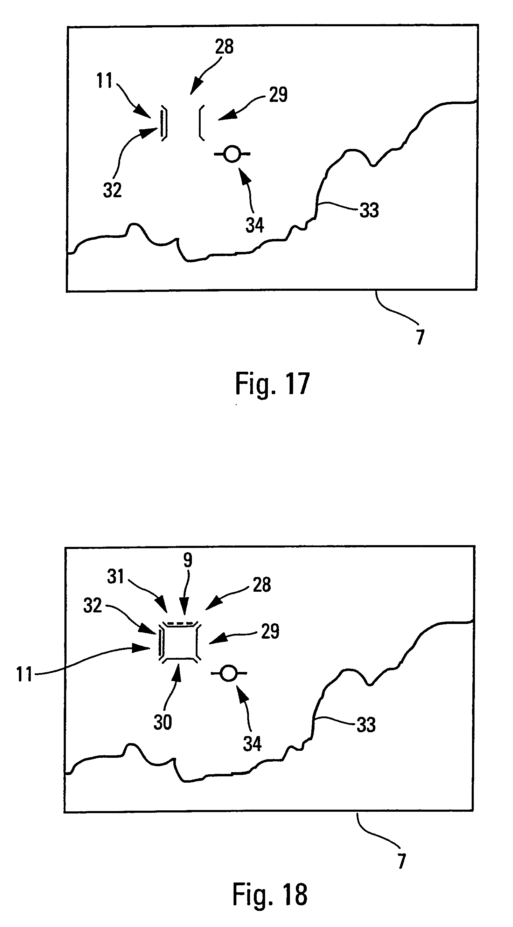

De façon usuelle, ladite mire de guidage 28 comporte :
- un indicateur de guidage vertical 29 comportant deux traits verticaux côte à côte, comme représenté sur la figure 17 ; et
- un indicateur de guidage latéral 30 comprenant deux traits horizontaux superposés.

Lesdits indicateurs de guidage latéral et vertical 29 et 30 peuvent être représentés conjointement (figures 16 et 18) ou séparément, comme illustré par la figure 17 sur laquelle est uniquement représenté ledit indicateur de guidage vertical 29.

Dans ce second mode de réalisation principal, un moyen d'indication 9, 11 conforme à l'invention comporte simplement une barrette 31, 32. Plus précisément, ledit premier moyen d'indication 9 comporte la barrette 31 qui est présentée :
- en haut de l'indicateur de guidage vertical 29, si le prochain segment vertical présente une pente positive (figures 16 et 18) ; et
- en bas dudit indicateur de guidage vertical 29, si le prochain segment vertical présente une pente négative.

En outre, ledit second moyen d'indication 11 comporte la barrette 32 qui est présentée :
- à droite de l'indicateur de guidage latéral 30, si la prochaine branche latérale est atteinte par une rotation vers la droite ; et
- à gauche dudit indicateur de guidage latéral 30, si la prochaine branche latérale est atteinte par une rotation vers la gauche (figures 17 et 18).

Lorsque la mire de guidage 28 comporte deux moyens d'indication 9, 11, comme représenté sur la figure 18, on peut différencier les barrettes 31 et 32, pour montrer lequel des changements de trajectoires indiqués est le prochain changement de trajectoire. En particulier, le prochain changement de trajectoire peut être indiqué en trait continu (barrette 32 sur la figure 18) et le ou les autres changements de trajectoire en traits interrompus (barrette 31).

Bien entendu, lorsque deux changements latéral et vertical ont lieu simultanément, les deux barrettes 31 et 32 peuvent être de même forme, notamment en trait continu.

Sur les figures 16 à 18, on a de plus représenté :
- le relief 33 visible en surimpression sur l'écran de visualisation 7 ; et
- un moyen d'indication auxiliaire 34 illustrant le vecteur vitesse sol de l'aéronef.

## Revendications

1. Indicateur de pilotage pour un aéronef qui est guidé le long d'une trajectoire de vol qui comporte :
- une trajectoire verticale comprenant une pluralité de segments verticaux successifs, qui sont rectilignes et présentent chacun une pente particulière ; et
- une trajectoire latérale comprenant une pluralité de branches latérales successives qui sont rectilignes et présentent chacune une route particulière,
ledit dispositif comportant :
- une unité centrale (3) susceptible de déterminer tout changement de trajectoire correspondant à un changement vertical qui représente un passage d'un premier segment vertical présentant une première pente à un second segment vertical présentant une pente différente, ou un changement latéral qui représente un passage d'une première branche latérale présentant une première route à une seconde branche latérale présentant une route différente ; et
- des moyens d'affichage (5) :
. qui sont susceptibles de présenter, sur au moins un écran de visualisation (7) :
* vau moins un premier moyen d'indication (8, 9) indiquant au moins un prochain changement vertical ; et
* au moins un second moyen d'indication (10, 11) différent du premier moyen d'indication (8, 9) et indiquant au moins un prochain changement latéral ; et
. qui sont formés de manière à présenter au moins l'un desdits premier et second moyens d'indication (8, 9, 10, 11), à savoir celui indiquant le changement de trajectoire le plus rapproché, à partir de la position actuelle de l'aéronef.

2. Indicateur de pilotage selon la revendication 1,
**caractérisé en ce que** lesdits moyens d'affichage (5) présentent simultanément lesdits premier et second moyens d'indication (8, 9, 10, 11).

3. Indicateur de pilotage selon l'une des revendications 1 et 2, **caractérisé en ce que** ledit écran de visualisation (7) est un écran tête haute.

4. Indicateur de pilotage selon l'une des revendications 1 et 2, **caractérisé en ce que** ledit écran de visualisation (7) est un écran de pilotage tête basse.

5. Indicateur de pilotage selon l'une quelconque des revendications 1 à 4,
**caractérisé en ce que** lesdits premier et second moyens d'indication (8, 10) sont autonomes sur l'écran de visualisation (7), par rapport à d'autres affichages dudit écran de visualisation (7).

6. Indicateur de pilotage selon la revendication 5,
**caractérisé en ce que** chacun desdits premier et second moyens d'indication (8, 10) comporte une flèche (12, 13).

7. Indicateur de pilotage selon la revendication 6,
**caractérisé en ce que** ledit premier moyen d'indication (8) comporte une flèche (12) qui est dirigée :
- vers le haut, si le prochain segment vertical présente une pente positive ; et
- vers le bas, si le prochain segment vertical présente une pente négative.

8. Indicateur de pilotage selon l'une des revendications 6 et 7, **caractérisé en ce que** ledit second moyen d'indication (10) comporte une flèche (13) qui est dirigée :
- vers la droite, si la prochaine branche latérale est atteinte par une rotation vers la droite ; et
- vers la gauche, si la prochaine branche latérale est atteinte par une rotation vers la gauche.

9. Indicateur de pilotage selon l'une quelconque des revendications 6 à 8,
**caractérisé en ce que** la longueur de ladite flèche (12, 13) est fonction d'une intensité concernant le prochain changement de trajectoire et chacun desdits premier et second moyens d'indication (8, 10) comporte, de plus, au moins une barrette (14, 15, 16) qui est associée à ladite flèche (12, 13) et qui permet de présenter une intensité limite pour le prochain changement indiqué.

10. Indicateur de pilotage selon la revendication 9,
**caractérisé en ce que** ledit premier moyen d'indication (8) comporte une seule barrette (14) qui indique la pente maximale que l'aéronef peut voler.

11. Indicateur de pilotage selon l'une des revendications 9 et 10,
**caractérisé en ce que** ledit second moyen d'indication (10) comporte deux barrettes (15, 16) qui indiquent, respectivement, les rayons de virage minimal et maximal que l'aéronef peut voler.

12. Indicateur de pilotage selon l'une quelconque des revendications 5 à 11,
**caractérisé en ce que** chacun desdits moyens d'indication (8, 10) comporte, de plus, une horloge (18) qui indique le temps restant jusqu'au prochain changement de trajectoire.

13. Indicateur de pilotage selon la revendication 12,
**caractérisé en ce que** ladite horloge (18) est présentée sous forme d'un cercle (18A), dont la représentation diminue progressivement de sorte que la partie restante est proportionnelle audit temps restant.

14. Indicateur de pilotage selon la revendication 13,
**caractérisé en ce que** le temps restant, indiqué par un cercle complet (18A), correspond à une durée prédéterminée.

15. Indicateur de pilotage selon la revendication 13,
**caractérisé en ce que** le temps restant, indiqué par un cercle complet (18A), correspond à une durée de vol prédite de l'aéronef, entre le dernier changement de trajectoire et le prochain changement de trajectoire.

16. Indicateur de pilotage selon l'une quelconque des revendications 5 à 15,
**caractérisé en ce que** lesdits premier et second moyens d'indication (8, 10) sont autonomes sur l'écran de visualisation (7), l'un par rapport à l'autre.

17. Indicateur de pilotage selon l'une quelconque des revendications 5 à 15,
**caractérisé en ce que** lesdits moyens d'affichage (5) présentent un indicateur global (21) comprenant au moins deux moyens d'indication (8, 10) et une seule horloge (18).

18. Indicateur de pilotage selon la revendication 17,
**caractérisé en ce que** lesdits moyens d'affichage (5) présentent de manière différenciée lesdits deux moyens d'indication (8, 10) dudit indicateur global (21).

19. Indicateur de pilotage selon l'une des revendications 17 et 18,
**caractérisé en ce que** lesdits moyens d'affichage (5) remettent à jour ledit indicateur global (21), à chaque changement de trajectoire.

20. Indicateur de pilotage selon l'une des revendications 17 à 19,
**caractérisé en ce que** lesdits moyens d'affichage (5) mettent en évidence, sur un moyen d'indication (8, 10) dudit indicateur global (21), le cas échéant, le nombre de changements prochains et consécutifs concernant le type de changement de trajectoire indiqué par ce moyen d'indication (8, 10).

21. Indicateur de pilotage selon l'une des revendications 17 à 20,
**caractérisé en ce que** lesdits moyens d'affichage (5) présentent de manière identique deux moyens d'indication (8, 10) qui indiquent deux changements de trajectoire qui sont réalisés simultanément.

22. Indicateur de pilotage selon l'une des revendications 17 à 20,
**caractérisé en ce que** lesdits moyens d'affichage (5) présentent une flèche globale (26) correspondant à la somme vectorielle de deux flèches (12, 13) relatives à deux moyens d'indication (8, 10) qui indiquent deux changements de trajectoire qui sont réalisés simultanément.

23. Indicateur de pilotage selon l'une quelconque des revendications 5 à 22,
**caractérisé en ce que** lesdits moyens d'affichage (5) présentent une pluralité de moyens d'indication (8, 10), selon un ordre particulier correspondant à l'ordre d'apparition des changements de trajectoire indiqués correspondants.

24. Indicateur de pilotage selon l'une quelconque des revendications 1 à 4,
**caractérisé en ce qu'**au moins l'un desdits premier et second moyens d'indication (9, 11) est associé à une mire de guidage (28) qui est également présentée sur ledit écran de visualisation (7).

25. Indicateur de pilotage selon la revendication 24,
**caractérisé en ce que** ledit moyen d'indication (9, 11) comporte une barrette (31, 32).

26. Indicateur de pilotage selon la revendication 25,
**caractérisé en ce que** ledit premier moyen d'indication (9) comporte une barrette (31) qui est présentée :
- en haut de la mire de guidage (28), si le prochain segment vertical présente une pente positive ; et
- en bas de la mire de guidage (28), si le prochain segment vertical présente une pente négative.

27. Indicateur de pilotage selon l'une des revendications 25 et 26,
**caractérisé en ce que** ledit second moyen d'indication (11) comporte une barrette (32) qui est présentée :
- à droite de la mire de guidage (28), si la prochaine branche latérale est atteinte par une rotation vers la droite ; et
- à gauche de la mire de guidage (28), si la prochaine branche latérale est atteinte par une rotation vers la gauche.

28. Indicateur de pilotage selon l'une quelconque des revendications 25 à 27,
**caractérisé en ce que** lesdits moyens d'affichage (5) présentent de manière différenciée le cas échéant une pluralité de barrettes (31, 32).

29. Aéronef,
**caractérisé en ce qu'**il comporte un indicateur de pilotage (1) tel que celui spécifié sous l'une quelconque des revendications 1 à 28.

## Patentansprüche

1. Steuerungsanzeige für ein Luftfahrzeug, welches entlang einer Flugtrajektorie geführt wird, welche umfasst:
- eine vertikale Trajektorie, die mehrere aufeinander folgende vertikale Segmente umfasst, welche geradlinig sind und jeweils eine bestimmte Neigung aufweisen;und
- eine seitliche Trajektorie, die mehrere aufeinander folgende seitliche Zweige aufweist, welche geradlinig sind und jeweils eine bestimmte Route aufweisen,
wobei die Vorrichtung umfasst:
- eine Zentraleinheit (3), die dazu eingerichtet ist, jede Trajektorienänderung zu bestimmen, die einer vertikalen Änderung, welche einen Übergang von einem eine erste Neigung aufweisenden ersten vertikalen Segment zu einem eine andere Neigung aufweisenden zweiten vertikalen Segment darstellt, oder einer seitlichen Änderung, welche einen Übergang von einem eine erste Route aufweisenden ersten seitlichen Zweig zu einem eine andere Route aufweisenden zweiten seitlichen Zweig darstellt, entspricht; und
- Darstellungsmittel (5):
• welche dazu eingerichtet sind, auf mindestens einem Bildschirmgerät (7) zu präsentieren:
* mindestens ein erstes Anzeigemittel (8, 9), das mindestens eine nächstfolgende vertikale Änderung anzeigt; und
* mindestens ein zweites, von dem ersten Anzeigemittel (8, 9) verschiedenes Anzeigemittel (10, 11), das mindestens eine nächstfolgende seitliche Änderung anzeigt; und
• welche derart ausgebildet sind, dass sie mindestens eines von dem ersten und dem zweiten Anzeigemittel (8, 9, 10, 11) präsentieren, nämlich dasjenige, das die, ausgehend von der gegenwärtigen Position des Luftfahrzeugs, nächste Trajektorienänderung anzeigt.

2. Steuerungsanzeige nach Anspruch 1,
**dadurch gekennzeichnet, dass** die Darstellungsmittel (5) das erste und das zweite Anzeigemittel (8, 9, 10, 11) gleichzeitig präsentieren.

3. Steuerungsanzeige nach einem der Ansprüche 1 und 2,
**dadurch gekennzeichnet, dass** Bildschirmgerät (7) ein Head-up-Display ist.

4. Steuerungsanzeige nach einem der Ansprüche 1 und 2,
**dadurch gekennzeichnet, dass** Bildschirmgerät (7) ein Head-down-Display ist.

5. Steuerungsanzeige nach einem der Ansprüche 1 bis 4, **dadurch gekennzeichnet, dass** das erste und das zweite Anzeigemittel (8, 10) auf dem Bildschirmgerät (7) autonom in Bezug auf andere Anzeigen des Bildschirmgerätes (7) sind.

6. Steuerungsanzeige nach Anspruch 5,
**dadurch gekennzeichnet, dass** das erste und das zweite Anzeigemittel (8, 10) jeweils einen Pfeil (12, 13) aufweisen.

7. Steuerungsanzeige nach Anspruch 6,
**dadurch gekennzeichnet, dass** das erste Anzeigemittel (8) einen Pfeil (12) aufweist, welcher gerichtet ist:
- nach oben, falls das nächste vertikale Segment eine positive Neigung aufweist; und
- nach unten, falls das nächste vertikale Segment eine negative Neigung aufweist.

8. Steuerungsanzeige nach einem der Ansprüche 6 und 7,
**dadurch gekennzeichnet, dass** das zweite Anzeigemittel (10) einen Pfeil (13) aufweist, welcher gerichtet ist:
- nach rechts, falls der nächste seitliche Zweig durch eine Drehung nach rechts erreicht wird; und
- nach links, falls der nächste seitliche Zweig durch eine Drehung nach links erreicht wird.

9. Steuerungsanzeige nach einem der Ansprüche 6 bis 8,
**dadurch gekennzeichnet, dass** die Länge des Pfeils (12, 13) von einer Intensität abhängt, welche die nächste Trajektorienänderung betrifft, und das erste und das zweite Anzeigemittel (8, 10) außerdem jeweils mindestens einen Steg (14, 15, 16) aufweisen, welcher dem Pfeil (12, 13) zugeordnet ist und welcher es ermöglicht, eine Grenzintensität für die nächste angezeigte Änderung darzustellen.

10. Steuerungsanzeige nach Anspruch 9,
**dadurch gekennzeichnet, dass** das erste Anzeigemittel (8) einen einzigen Steg (14) aufweist, welcher die maximale Neigung anzeigt, mit der das Luftfahrzeug fliegen kann.

11. Steuerungsanzeige nach einem der Ansprüche 9 und 10,
**dadurch gekennzeichnet, dass** das zweite Anzeigemittel (10) zwei Stege (15, 16) aufweist, welche den minimalen bzw. maximalen Kurvenradius anzeigen, mit dem das Luftfahrzeug fliegen kann.

12. Steuerungsanzeige nach einem der Ansprüche 5 bis 11,
**dadurch gekennzeichnet, dass** jedes der Anzeigemittel (8, 10) außerdem eine Uhr (18) aufweist, welche die bis zur nächsten Trajektorienänderung verbleibende Zeit anzeigt.

13. Steuerungsanzeige nach Anspruch 12,
**dadurch gekennzeichnet, dass** die Uhr (18) in Form eines Kreises (18A) dargestellt ist, dessen Darstellung sich allmählich verkleinert, derart, dass der verbleibende Teil zu der verbleibenden Zeit proportional ist.

14. Steuerungsanzeige nach Anspruch 13,
**dadurch gekennzeichnet, dass** die verbleibende Zeit, die durch einen vollständigen Kreis (18A) angezeigt wird, einer vorbestimmten Dauer entspricht.

15. Steuerungsanzeige nach Anspruch 13,
**dadurch gekennzeichnet, dass** die verbleibende Zeit, die durch einen vollständigen Kreis (18A) angezeigt wird, einer vorhergesagten Flugdauer des Luftfahrzeugs zwischen der letzten Trajektorienänderung und der nächsten Trajektorienänderung entspricht.

16. Steuerungsanzeige nach einem der Ansprüche 5 bis 15,
**dadurch gekennzeichnet, dass** das erste und das zweite Anzeigemittel (8, 10) auf dem Bildschirmgerät (7) autonom voneinander sind.

17. Steuerungsanzeige nach einem der Ansprüche 5 bis 15,
**dadurch gekennzeichnet, dass** die Darstellungsmittel (5) einen Gesamtanzeiger (21) präsentieren, der mindestens zwei Anzeigemittel (8, 10) und eine einzige Uhr (18) umfasst.

18. Steuerungsanzeige nach Anspruch 17,
**dadurch gekennzeichnet, dass** die Darstellungsmittel (5) die zwei Anzeigemittel (8, 10) des Gesamtanzeigers (21) auf unterschiedliche Weise präsentieren.

19. Steuerungsanzeige nach einem der Ansprüche 17 und 18,
**dadurch gekennzeichnet, dass** die Darstellungsmittel (5) den Gesamtanzeiger (21) bei jeder Trajektorienänderung aktualisieren.

20. Steuerungsanzeige nach einem der Ansprüche 17 bis 19,
**dadurch gekennzeichnet, dass** die Darstellungsmittel (5) auf einem Anzeigemittel (8, 10) des Gesamtanzeigers (21) gegebenenfalls die Anzahl der nächsten und nachfolgenden Änderungen sichtbar machen, die den durch dieses Anzeigemittel (8, 10) angezeigten Typ von Trajektorienänderung betreffen.

21. Steuerungsanzeige nach einem der Ansprüche 17 bis 20,
**dadurch gekennzeichnet, dass** die Darstellungsmittel (5) zwei Anzeigemittel (8, 10) welche zwei Trajektorienänderungen anzeigen, die gleichzeitig realisiert werden, auf identische Weise präsentieren.

22. Steuerungsanzeige nach einem der Ansprüche 17 bis 20,
**dadurch gekennzeichnet, dass** die Darstellungsmittel (5) einen Gesamtpfeil (26) präsentieren, welcher der Vektorsumme von zwei Pfeilen (12, 13) entspricht, die sich auf zwei Anzeigemittel (8, 10) beziehen, welche zwei Trajektorienänderungen anzeigen, die gleichzeitig realisiert werden.

23. Steuerungsanzeige nach einem der Ansprüche 5 bis 22,
**dadurch gekennzeichnet, dass** die Darstellungsmittel (5) mehrere Anzeigemittel (8, 10) in einer bestimmten Reihenfolge präsentieren, die der Reihenfolge des Eintretens der entsprechenden angezeigten Trajektorienänderungen entspricht.

24. Steuerungsanzeige nach einem der Ansprüche 1 bis 4,
**dadurch gekennzeichnet, dass** das erste und/oder das zweite Anzeigemittel (9, 11) mit einem Führungsbild (28) verknüpft ist, welches ebenfalls auf dem Bildschirmgerät (7) präsentiert wird.

25. Steuerungsanzeige nach Anspruch 24,
**dadurch gekennzeichnet, dass** das Anzeigemittel (9, 11) einen Steg (31, 32) aufweist.

26. Steuerungsanzeige nach Anspruch 25,
**dadurch gekennzeichnet, dass** das erste Anzeigemittel (9) einen Steg (31) aufweist, welcher präsentiert wird:
- im oberen Bereich des Führungsbildes (28), falls das nächste vertikale Segment eine positive Neigung aufweist; und
- im unteren Bereich des Führungsbildes (28), falls das nächste vertikale Segment eine negative Neigung aufweist.

27. Steuerungsanzeige nach einem der Ansprüche 25 und 26,
**dadurch gekennzeichnet, dass** das zweite Anzeigemittel (11) einen Steg (32) aufweist, welcher präsentiert wird:
- im rechten Bereich des Führungsbildes (28), falls der nächste seitliche Zweig durch eine Drehung nach rechts erreicht wird; und
- im linken Bereich des Führungsbildes (28), falls der nächste seitliche Zweig durch eine Drehung nach links erreicht wird.

28. Steuerungsanzeige nach einem der Ansprüche 25 bis 27, **dadurch gekennzeichnet, dass** die Darstellungsmittel (5) mehrere Stege (31, 32) gegebenenfalls auf unterschiedliche Weise präsentieren.

29. Luftfahrzeug,
**dadurch gekennzeichnet, dass** es eine Steuerungsanzeige (1) aufweist, wie unter einem der Ansprüche 1 bis 28 definiert.

## Claims

1. A flight control indicator for an aircraft which is guided along a flight trajectory which comprises:
- a vertical trajectory comprising a plurality of successive vertical segments, which are rectilinear and each present a particular slope; and
- a lateral trajectory comprising a plurality of successive lateral branches, which are rectilinear and each presents a particular course,
said indicator comprising:
- a central unit (3) able to determine any change of trajectory corresponding to a vertical change which represents a passage from a first vertical segment presenting a first slope to a second vertical segment presenting a different slope or a lateral change which represents a passage from a first lateral branch presenting a first course to a second lateral branch presenting a different course; and
- means of display (5):
• which are able to present, on at least one viewing screen (7):
* at least one first means of indication (8, 9) indicating at least one next vertical change; and
* at least one second means of indication (10, 11) different from said first means of indication (8, 9) and indicating at least one next lateral change; and
• which are formed in such a way as to present at least one of said first and second means of indication (8, 9, 10, 11), namely the one indicating the change of trajectory which is closest, from the current position of the aircraft.

2. The flight control indicator as claimed in claim 1,
**characterized in that** said means of display (5) simultaneously present said first and second means of indication (8, 9, 10, 11).

3. The flight control indicator as claimed in one of claims 1 and 2,
**characterized in that** said viewing screen (7) is a head-up screen.

4. The flight control indicator as claimed in one of claims 1 and 2,
**characterized in that** said viewing screen (7) is a head-down flight control screen.

5. The flight control indicator as claimed in any one of claims 1 to 4,
**characterized in that** said first and second means of indication (8, 10) are autonomous on the viewing screen (7), with respect to other displays of said viewing screen (7).

6. The flight control indicator as claimed in claim 5,
**characterized in that** each of said first and second means of indication (8, 10) comprises an arrow (12, 13).

7. The flight control indicator as claimed in claim 6,
**characterized in that** said first means of indication (8) comprises an arrow (12) which is directed:
- upward, if the next vertical segment presents a positive slope; and
- downward, if the next vertical segment presents a negative slope.

8. The flight control indicator as claimed in one of claims 6 and 7,
**characterized in that** said second means of indication (10) comprises an arrow (13) which is directed:
- rightward, if the next lateral branch is attained through a rightward rotation; and
- leftward, if the next lateral branch is attained through a leftward rotation.

9. The flight control indicator as claimed in any one of claims 6 to 8,
**characterized in that** the length of said arrow (12, 13) is dependent on an intensity relating to the next change of trajectory and each of said first and second means of indication (8, 10) comprises, moreover, at least one bar (14, 15, 16) which is associated with said arrow (12, 13) and which makes it possible to present a limit intensity for the next change indicated.

10. The flight control indicator as claimed in claim 9,
**characterized in that** said first means of indication (8) comprises a single bar (14) which indicates the maximum slope that the aircraft can fly.

11. The flight control indicator as claimed in one of claims 9 and 10,
**characterized in that** said second means of indication (10) comprises two bars (15, 16) which indicate, respectively, the minimum and maximum turning radii that the aircraft can fly.

12. The flight control indicator as claimed in any one of claims 5 to 11,
**characterized in that** each of said means of indication (8, 10) comprises, moreover, a clock (18) which indicates the time remaining until the next change of trajectory.

13. The flight control indicator as claimed in claim 12,
**characterized in that** said clock (18) is presented in the form of a circle (18A), the representation of which diminishes progressively so that the remaining part is proportional to said remaining time.

14. The flight control indicator as claimed in claim 13,
**characterized in that** the remaining time, indicated by a complete circle (18A), corresponds to a predetermined duration.

15. The flight control indicator as claimed in claim 13,
**characterized in that** the time remaining, indicated by a complete circle (18A), corresponds to a predicted duration of flight of the aircraft, between the last change of trajectory and the next change of trajectory.

16. The flight control indicator as claimed in any one of claims 5 to 15,
**characterized in that** said first and second means of indication (8, 10) are autonomous on the viewing screen (7), the one with respect to the other.

17. The flight control indicator as claimed in any one of claims 5 to 15,
**characterized in that** said means of display (5) present a global indicator (21) comprising at least two means of indication (8, 10) and a single clock (18).

18. The flight control indicator as claimed in claim 17,
**characterized in that** said means of display (5) present said two means of indication (8, 10) of said global indicator (21) in a differentiated manner.

19. The flight control indicator as claimed in one of claims 17 and 18,
**characterized in that** said means of display (5) reupdate said global indicator (21), with each change of trajectory.

20. The flight control indicator as claimed in one of claims 17 to 19,
**characterized in that** said means of display (5) depict, on a means of indication (8, 10) of said global indicator (21), as the case may be, the number of next and consecutive changes relating to the type of change of trajectory indicated by this means of indication (8, 10).

21. The flight control indicator as claimed in one of claims 17 to 20,
**characterized in that** said means of display (5) present in an identical manner two means of indication (8, 10) which indicate two changes of trajectory which are carried out simultaneously.

22. The flight control indicator as claimed in one of claims 17 to 20,
**characterized in that** said means of display (5) present a global arrow (26) corresponding to the vector sum of two arrows (12, 13) pertaining to two means of indication (8, 10) which indicate two changes of trajectory which are carried out simultaneously.

23. The flight control indicator as claimed in any one of claims 5 to 22,
**characterized in that** said means of display (5) present a plurality of means of indication (8, 10), according to a particular order corresponding to the order of appearance of the corresponding changes of trajectory indicated.

24. The flight control indicator as claimed in any one of claims 1 to 4,
**characterized in that** at least one of said first and second means of indication (9, 11) is associated with a guidance gauge (28) which is also presented on said viewing screen (7).

25. The flight control indicator as claimed in claim 24,
**characterized in that** said means of indication (9, 11) comprises a bar (31, 32).

26. The flight control indicator as claimed in claim 25,
**characterized in that** said first means of indication (9) comprises a bar (31) which is presented:
- at the top of the guidance gauge (28), if the next vertical segment presents a positive slope; and
- at the bottom of the guidance gauge (28), if the next vertical segment presents a negative slope.

27. The flight control indicator as claimed in one of claims 25 and 26,
**characterized in that** said second means of indication (11) comprises a bar (32) which is presented:
- to the right of the guidance gauge (28), if the next lateral branch is attained through a rightward rotation; and
- to the left of the guidance gauge (28), if the next lateral branch is attained through a leftward rotation.

28. The flight control indicator as claimed in any one of claims 25 to 27,
**characterized in that** said means of display (5) present a plurality of bars (31, 32) in a differentiated manner as the case may be.

29. An aircraft,
**characterized in that** comprises a flight control indicator (1) such as that specified under any one of claims 1 to 28.
